(19) Europäisches Patentamt
European Patent Office
Office européen des brevets

(11) **EP 1 729 591 B1**

(12) **EUROPEAN PATENT SPECIFICATION**

(45) Date of publication and mention of the grant of the patent:
**12.10.2016 Bulletin 2016/41**

(21) Application number: **05715118.5**

(22) Date of filing: **22.03.2005**

(51) Int Cl.:
***A23C 19/032*** *(2006.01)* ***A23C 19/04*** *(2006.01)*

(86) International application number:
**PCT/DK2005/000197**

(87) International publication number:
**WO 2005/089562 (29.09.2005 Gazette 2005/39)**

(54) **PROCESS FOR PRODUCING CHEESE**

VERFAHREN ZUR HERSTELLUNG VON KÄSE

PROCEDE PERMETTANT DE FABRIQUER DU FROMAGE

(84) Designated Contracting States:
**AT BE BG CH CY CZ DE DK EE ES FI FR GB GR HU IE IS IT LI LT LU MC NL PL PT RO SE SI SK TR**

(30) Priority: **24.03.2004 US 555922 P**

(43) Date of publication of application:
**13.12.2006 Bulletin 2006/50**

(73) Proprietors:
- **Novozymes A/S**
  **2880 Bagsvaerd (DK)**
- **Novozymes North America, Inc.**
  **Franklinton, NC 27525 (US)**

(72) Inventors:
- **FATUM, Tine, Muxoll,**
  **DK-3450 Alleroed (DK)**
- **HIGGINS, Don**
  **Franklinton, nc 27525 (US)**

(74) Representative: **Kofoed, Gertrud Sonne et al**
**Novozymes A/S**
**Patents**
**Krogshoejvej 36**
**2880 Bagsvaerd (DK)**

(56) References cited:
**WO-A-00/54601** **WO-A-03/070013**
**US-A1- 2003 215 544** **US-B1- 6 399 121**

- **PICÓN A. ET AL: "Proteinases encapsulated in stimulated release liposomes for cheese ripening" BIOTECHNOLOGY LETTERS, vol. 19, no. 4, April 1997 (1997-04), pages 345-348, XP002328321**
- **DATABASE FSTA [Online] INTERNATIONAL FOOD INFORMATION SERVICE (IFIS), FRANkFURT-MAIN, DE; 1982, UMANSKII M S ET AL: "Effect on quality of Kostroma cheese of bacterial cultures selected on phospholipase activity." XP002141695 Database accession no. 82-1-03-p0353 & MOLOCHNAYA PROMYSHLENNOST, 1980, VSES. NAUCHNO-ISSLED. INST. MASLODEL'NOI I SYRODEL'NOI PROMYSHLENNOSTI, UGLICH, USSR**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 729 591 B1

## Description

### TECHNICAL FIELD

The present invention relates to a process for producing cheese from enzyme-treated cheese milk, and the use of the resulting produced cheese as ingredient in food products.

### BACKGROUND OF THE INVENTION

In cheese products, the state of the fat phase is important to the properties of the cheese. The fat phase is particularly important for the stabilisation of the cheese during production and ripening, but also for the final cheese to be used, eaten as such, or used in prepared ready-to-eat dishes e.g. pizza, toast or burgers.

Also, the oiling-off properties of cheese products is an important quality parameter. Oiling-off is the tendency to form free oil upon storage and melting. Excessive oiling-off is a defect most often related to heated products wherein cheese is used, e.g. pizza and related foods (cf. e.g. Kindstedt J.S; Rippe J.K. 1990, J Dairy Sci. 73: 867-873. It becomes more and more important to control/eliminate this defect, as the consumer concern about dietary fat levels increases. Free oil/fat in a product is perceived as a high fat content, and is generally undesirable.

There is a need for an improved process for the manufacturing of cheese, in particular a process for improving the stability of the fat in cheese. Additionally, there is a desire in the cheese industry to increase the cheese yield obtained from a given amount of milk.

WO 00/54601 discloses a method for improving the properties of cheese, particularly the stability of the fat phase, comprising the steps of a) treating the cheese milk with a phospholipase and b) producing cheese from the cheese milk. The phospholipase is selected from the group consisting of phospholipase A1, phospholipase A2, phospholipase B and combinations thereof and added in an amount sufficient to decrease the oiling-off effect in cheese and/or to increase cheese yield.

Picón et al. (1997) Biotechnology Letters 19(4), pp. 345-348 discloses the addition of proteinases to milk to make cheese, wherein the proteinases were co-encapsulated with phospholipase C in stimulated release liposomes. WO 03/070013 discloses a process for producing cheese comprising adding to the cheese milk a combination of phospholipase A and lysophospholipase in an amount effective to decrease the oiling-off effect in cheese and/or to increase cheese yield. Umanskii et al. (1980) Molochnaya Promyshlennost 11, pp. 21-25 discloses the examination of a number of bacterial strains for their phospholipase activity and the use of a subset of these strains in production of Kostroma cheese.

### SUMMARY OF THE INVENTION

The inventors have found that treating cheese milk or a fraction of cheese milk with phospholipase C and/or phospholipase D and producing cheese from the treated cheese milk, increases the yield of cheese and/or decreases oiling-off of the cheese.

The present invention thus relates to use of a phospholipase selected from the group consisting of phospholipase C, phospholipase D, and combinations thereof, for increasing cheese yield.

### DETAILED DISCLOSURE OF THE INVENTION

The phospholipase C and/or phospholipase D are added to cheese milk, or a fraction of cheese milk, during the cheese making process. As used herein, the term "cheese milk" is the milk-based composition from which the cheese is prepared.

The phospholipase C and/or phospholipase D may be added at any appropriate stage during the cheese making process. In a preferred embodiment of the invention, the phospholipase C and/or phospholipase D are added during standardization of the fat and/or protein content of the cheese milk, more preferably, at the same time as the cheese milk is filled into the cheese vat, at the same time as the starter culture is added to the cheese milk, or at the same time as cheese rennet is added to the cheese milk.

Cheese milk and the production of cheese:

In the present context, the term "cheese" refers to any kind of cheese and such as, e.g., natural cheese, cheese analogues and processed cheese. The cheese may be obtained by any suitable process known in the art, such as, e.g., by enzymatic coagulation of the cheese milk with rennet, or by acidic coagulation of the cheese milk with food grade acid or acid produced by lactic acid bacteria growth. In one embodiment, the cheese manufactured by the process of the invention is rennet-curd cheese. Rennet is commercially available, e.g. as Naturen® (animal rennet), Chy-max® (fermentation produced chymosin), Microlant® (Microbial coagulant produced by fermentation), all from Chr. Hansen A/S, Denmark). The cheese milk may be subjected to a conventional cheese-making process.

Processed cheese is preferably manufactured from natural cheese or cheese analogues by cooking and emulsifying the cheese, such as, with emulsifying salts (e.g. phosphates and citrate). The process may further include the addition of spices/condiments.

The term "cheese analogues" refers to cheese-like products which contain fat (such as, e.g., milk fat (e.g., cream) as a part of the composition, and, in which further contain, as part of the composition, a non-milk constituents, such as, e.g., vegetable oil. An example of a cheese analogue is cheese base.

The cheeses produced by the process of the present invention comprise all varieties of cheese, such as, e.g. Campesino, Chester, Danbo, Drabant, Herregård, Manchego, Provolone, Saint Paulin, Soft cheese, Svecia, Taleggio, White cheese, including rennet-curd cheese produced by rennet-coagulation of the cheese curd; ripened cheeses such as Cheddar, Colby, Edam, Muenster, Gryere, Emmenthal, Camembert, Parmesan and Romano; fresh cheeses such as Mozzarella and Feta; acid coagulated cheeses such as cream cheese, Neufchatel, Quarg, Cottage Cheese and Queso Blanco; and pasta filata cheese. One embodiment relates to the production of pizza cheese by the process of the invention.

In cheese manufacturing, the coagulation of the casein in milk is preferably performed in two ways: the so-called rennet-curd and acid-curd cheese. In cheese production these two types of curds makes up two major groups of cheese types. Fresh acid-curd cheeses refer to those varieties of cheese produced by the coagulation of milk, cream or whey via acidification or a combination of acid and heat, and which are ready for consumption once the manufacturing without ripening are completed. Fresh acid-curd cheeses generally differ from rennet-curd cheese varieties (e.g. Camembert, Cheddar, Emmenthal) where coagulation normally is induced by the action of rennet at pH values 6.4-6.6, in that coagulation normally occurs close to the isoelectric point of casein, i.e. e.g. at pH 4.6 or at higher values when elevated temperatures are used, e.g. in Ricotta pH 6.0 and 80°C. In a preferred embodiment of the invention, the cheese belongs to the class of rennet curd cheeses.

Mozzarella is a member of the so-called pasta filata, or stretched curd, cheeses which are normally distinguished by a unique plasticising and kneading treatment of the fresh curd in hot water, which imparts the finished cheese its characteristic fibrous structure and melting and stretching properties, cf. e.g. "Mozzarella and Pizza cheese" by Paul S. Kindstedt, Cheese: Chemistry, physics and microbiology, Volume 2: Major Cheese groups, second edition, page 337-341, Chapman & Hall. Pizza cheese as used herein includes cheeses suitable for pizzas and they are usually pasta filata/stretched curd cheeses. In one embodiment, the process of the invention further comprises a heat/stretching treatment as for pasta filata cheeses, such as for the manufacturing of Mozzarella.

In further embodiments of the invention, the cheese milk is prepared, totally or in part, from dried milk fractions, such as, e.g., whole milk powder, skim milk powder, casein, caseinate, total milk protein or buttermilk powder, or any combination thereof.

In preferred embodiments, the cheese milk or cheese milk fraction, to which phospholipase C and/or phospholipase D are to be added, comprises or consists of cream. In further embodiments, the cheese milk or cheese milk fraction to which phospholipase C and/or phospholipase D are to be added, comprises or consists of butter. In still further embodiments, the cheese milk or cheese milk fraction to which phospholipase C and/or phospholipase D are to be added, comprises or consists of buttermilk.

Milk from different species of animals may be used in the production of cheese. Thus, "milk" may be the lacteal secretion obtained by milking, e.g., cows, sheep, goats, buffaloes or camels.

The milk for production of cheese may be standardised to the desired composition by removal of all or a portion of any of the raw milk components and/or by adding thereto additional amounts of such components. This may be done by separation of the raw milk into cream and skim milk at arrival to the dairy. Thus, the cheese milk may be prepared as done conventionally by fractioning the raw milk and recombining the fractions so as to obtain the desired final composition of the cheese milk. The separation may be made in continuous centrifuges leading to a skim milk fraction with very low fat content (i.e. e.g. $< 0.5\%$) and cream with e.g. $> 35\%$ fat. The cheese milk may be prepared by mixing cream and skim milk.

The cheese milk, to which phospholipase C and/or phospholipase D is to be added, comprises phospholipids. The cheese milk may have any total fat content which is found suitable for the cheese to be produced by the process of the invention, such as, e.g., about 25% fat (of dry matter), e.g. in the range 10-50% fat, of which e.g., about 0.06%, such as e.g. 0.02-5% (w/w), of the total fat content is phospholipids.

Conventional steps may be taken to secure low bacterial counts in the cheese milk. It is generally preferred not to pasteurise the skim milk because heat denatured proteins in the cheese milk have a negative influence on the coagulation of the milk, and retard the ripening of the cheese. The bacterial count of the skim milk fraction may thus be lowered by other technologies, such as, for example, by microfiltration or bactofugation. The cream is preferably pasteurised to lower the bacterial count in the product. In another preferred embodiment, the cheese milk is raw, unpasteurised milk.

In an embodiment of the invention, the cheese milk may be subjected to a homogenisation process before the production of cheese, such as e.g. in the production of Danish Blue Cheese.

Determination of phospholipase C and D activity

Definition of units:

1 Unit of Phospholipase C activity will liberate 1 micromole of water soluble organic phosphorus from egg yolk L-alpha-phosphatidylcholine per minute at pH 7.3 at 37°C.
1 Unit of phospholipase D activity will liberate 1 micromole of choline from egg yolk L-alpha-phosphatidylcholine per hour at pH 8.0 at 30°C.

The enzymatic treatment:

The enzymatic treatment in the process of the invention may be conducted by dispersing the phospholipase C and/or phospholipase D into cheese milk or a cheese milk fraction, and allowing the enzyme reaction to take place at an appropriate holding-time at an appropriate temperature. The treatment with phospholipase C and/or phospholipase D may be carried out at conditions chosen to suit the selected enzymes according to principles well known in the art. The enzymatic treatment may be conducted at any suitable pH, such as e.g., in the range 2-10, such as, at a pH of 4-9 or 5-7. It may be preferred to let the phospholipase C and/or phospholipase D act at the natural pH of the cheese milk as it develops during the cheese making process.

The process may be conducted so that the phospholipase C and/or phospholipase D are allowed to react at coagulation temperature, such as, 25-45°C (e.g., for at least 5 minutes, such as, e.g., for at least 10 minutes or at least 30 minutes, e.g., for 5-60 minutes).

Optionally, after the phospholipase C and/or phospholipase D have been allowed to act on the cheese milk or cheese milk fraction, the phospholipase C and/or phospholipase D enzyme protein is removed, reduced, inactivated or any combination thereof.

The phospholipase C and/or phospholipase D are added in suitable amounts to produce the cheese having the desired properties. Preferably, the phospholipase C and/or phospholipase D are added in amounts effective to decrease the oiling-off effect in cheese and/or to increase cheese yield. A suitable dosage of phospholipase C will usually be in the range 0.1-100 units per g milk fat, such as 0.1-50 units per g milk fat, or 0.5-5 units per g milk fat.
Dosage of phospholipase D will usually be in the range 10-10000 units per g milk fat, such as 100-5000 units per g milk fat, or 500-1500 units per g milk fat.

Enzymes to be used in the process of the invention:

Phospholipids, such as phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases C and D.

The enzymes used in the process of the present invention comprise a phospholipase C and/or phospholipase D.

Phospholipase C is defined according to standard enzyme EC-classification as EC 3.1.4.3. Phospholipase C hydrolyses the phosphate bond on phosphatidylcholine and other glycerophospholipids, e.g. phosphatidylethanolamine, yielding diacylglycerol; this enzyme will also hydrolyse the phosphate bonds of sphingomyelin, cardiolipin, choline plasmalogen and ceramide phospholipids.

Reaction with phosphatidylcholine:

phosphatidylcholine + water <=> 1,2-diacylglycerol + choline phosphate

Phospholipase D is defined according to standard enzyme EC-classification as EC 3.1.4.4. Phospholipase D hydrolyses the phosphate bonds of phospholipids and sphingomyelin to give the corresponding phosphatidic acid.
Reaction with phosphatidylcholine:

A phosphatidylcholine + water <=> choline + a phosphatidate

The phospholipase C activity may be provided by enzymes having other activities as well, such as e.g. a lipase with phospholipase C activity or a phosphatase with phospholipase C activity The phospholipase C activity may e.g. be from a lipase with phospholipase C side activity. In other embodiments of the invention the phospholipase C enzyme activity is provided by an enzyme having essentially only phospholipase C activity and wherein the phospholipase C enzyme activity is not a side activity.

The phospholipase C may be of any origin, e.g. of animal origin, such as mammalian origin, of plant origin, or of microbial origin, such as fungal origin or bacterial origin, such as from a strain of *Mycobacterium,* e.g. *M. tuberculosis* or *M. bovis;* a strain of *Bacillus,* e.g. *B. cereus*; a strain of *Clostridium,* e.g. *C. bifermentans, C. haemolyticum, C. novyi, C. sordellii,* or *C. perfringens*; a strain of *Listeria,* e.g. *L. monocytogenes;* a strain of *Pseudomonas,* e.g. *P. aeruginosa;* or a strain of *Staphylococcus,* e.g. *S. aureus;* or a strain of *Burkholderia,* e.g. *B. pseudomallei.*

The phospholipase D activity may be provided by enzymes having other activities as well, such as e.g. a lipase with phospholipase D activity, a phosphatase with phospholipase D activity, or a cholinesterase with phospholipase D activity. The phospholipase D activity may e.g. be from a lipase with phospholipase D side activity. In other embodiments of the invention the phospholipase D enzyme activity is provided by an enzyme having essentially only phospholipase D activity and wherein the phospholipase D enzyme activity is not a side activity.

The phospholipase D may be of any origin, e.g. of animal origin, such as mammalian origin, e.g. from mouse, rat, or Chinese hamster; of plant origin, e.g. from cabbage, maize, rice, castor bean, tobacco, cowpea, or *Arabidopsis thaliana;* or of microbial origin, such as of bacterial origin, e.g. from a strain of *Corynebacterium,* e.g. *C. pseudotuberculosis, C. ulcerans,* or *C. haemolyticum*; or fungal origin, such as e.g. from a strain of *Streptomyces,* e.g. *S. antibioticus* or *S. chromofuscus*; a strain of *Trichoderma,* e.g. *T. reesei;* a strain of *Saccharomyces,* e.g. *S. cerevisiae;* or a strain of *Aspergillus,* e.g. *A. oryzae, A. niger, A. nidulans* or *A. fumigatus.*

Enzyme sources and formulation

The phospholipase C and/or phospholipase D used in the process of the invention may be derived or obtainable from any of the sources mentioned herein. The term "derived" means in this context that the enzyme may have been isolated from an organism where it is present natively, i.e. the identity of the amino acid sequence of the enzyme are identical to a native enzyme. The term "derived" also means that the enzymes may have been produced recombinantly in a host organism, the recombinant produced enzyme having either an identity identical to a native enzyme or having it a modified amino acid sequence, e.g. having one or more amino acids which are deleted, inserted and/or substituted, i.e. a recombinantly produced enzyme which is a mutant and/or a fragment of a native amino acid sequence. Within the meaning of a native enzyme are included natural variants. Furthermore, the term "derived" includes enzymes produced synthetically by e.g. peptide synthesis. The term "derived" also encompasses enzymes which have been modified e.g. by glycosylation, phosphorylation etc., whether in vivo or in vitro. The term "obtainable" in this context means that the enzyme has an amino acid sequence identical to a native enzyme. The term encompasses an enzyme that has been isolated from an organism where it is present natively, or one in which it has been expressed recombinantly in the same type of organism or another, or enzymes produced synthetically by e.g. peptide synthesis. With respect to recombinantly produced enzyme the terms "obtainable" and "derived" refers to the identity of the enzyme and not the identity of the host organism in which it is produced recombinantly.

Accordingly, the phospholipase C and/or phospholipase D may be obtained from a microorganism by use of any suitable technique. For instance, a phospholipase C and/or phospholipase D enzyme preparation may be obtained by fermentation of a suitable microorganism and subsequent isolation of a phospholipase C and/or phospholipase D preparation from the resulting fermented broth or microorganism by methods known in the art. The phospholipase C and/or phospholipase D may also be obtained by use of recombinant DNA techniques. Such method normally comprises cultivation of a host cell transformed with a recombinant DNA vector comprising a DNA sequence encoding the phospholipase C or phospholipase D in question and the DNA sequence being operationally linked with an appropriate expression signal such that it is capable of expressing the phospholipase C or phospholipase D in a culture medium under conditions permitting the expression of the enzyme and recovering the enzyme from the culture. The DNA sequence may also be incorporated into the genome of the host cell. The DNA sequence may be of genomic, cDNA or synthetic origin or any combinations of these, and may be isolated or synthesized in accordance with methods known in the art.

In the process of the invention the phospholipase C and/or phospholipase D may be purified. The term "purified" as used herein covers phospholipase C or phospholipase D enzyme protein free from components from the organism from which it is derived. The term "purified" also covers phospholipase C or phospholipase D enzyme protein free from components from the native organism from which it is obtained, this is also termed "*essentially* pure" phospholipase C or phospholipase D and may be particularly relevant for phospholipases which are naturally occurring and which have not been modified genetically, such as by deletion, substitution or insertion of one or more amino acid residues.

Accordingly, the phospholipase C and/or phospholipase D may be purified, viz. only minor amounts of other proteins being present. The expression "other proteins" relate in particular to other enzymes. The term "purified" as used herein also refers to removal of other components, particularly other proteins and most particularly other enzymes present in the cell of origin of the phospholipase C or phospholipase D. The phospholipase C and/or phospholipase D may be "substantially pure", i.e. free from other components from the organism in which it is produced, i.e., e.g., a host organism for recombinantly produced phospholipase. Preferably, the enzymes are at least 75% (w/w) pure, more preferably at least 80%, 85%, 90% or even at least 95% pure. In a still more preferred embodiment the phospholipase C and/or phospholipase D is an at least 98% pure enzyme protein preparation. In other embodiments the phospholipase C and/or phospholipase D is not naturally present in milk.

The terms "phospholipase C" and "phospholipase D" includes whatever auxiliary compounds that may be necessary for the catalytic activity of the enzyme, such as, e.g. an appropriate acceptor or cofactor, which may or may not be naturally present in the reaction system.

The phospholipase C and phospholipase D may be in any form suited for the use in question, such as e.g. in the form of a dry powder or granulate, a non-dusting granulate, a liquid, a stabilized liquid, or a protected enzyme. Granulates may be produced, e.g. as disclosed in US 4,106,991 and US 4,661,452, and may optionally be coated by methods known in the art. Liquid enzyme preparations may, for instance, be stabilized by adding stabilizers such as a sugar, a sugar alcohol or another polyol, lactic acid or another organic acid according to established methods. Protected enzymes may be prepared according to the method disclosed in EP 238,216.

The present invention further relates to use of the cheese produced by the process of the invention in pizza, ready-to-eat dishes, processed cheese, or as an ingredient in other food products. Accordingly, the cheese produced according to the process of the invention may be used in further processed food products like processed cheese, pizza, burgers, toast, sauces, dressings, cheese powder, or cheese flavours.

In further embodiments, the process of the invention further comprises the step of subjecting the cheese to a heating treatment, such as, e.g., in the range 150-350°C.

The present invention is further illustrated in the following example which is not to be in any way limiting to the scope of protection.

**Example 1**

**Degradation of milk phospholipids by phospholipase C and D**

Materials

Phospholipase C type IV from *Bacillus cereus* (Sigma P-9439, Sigma-Aldrich, St. Louis, USA) Phospholipase D from *Streptomyces chromofuscus* (Sigma P-8023, Sigma-Aldrich, St. Louis,

USA)

Cream 38% fat

Enzyme reaction. Phospholipase C (PLC) was dissolved in water and dosed to 4 g cream samples in concentrations of 5, 10 and 50 units per gram fat. Phospholipase D (PLD) was dissolved in water and dosed to 4 g cream samples in concentrations of 500, 1500 and 3000 units per gram fat. The samples were incubated at 37°C for 45 min. Reactions were stopped by the addition of organic solvent for lipid extraction.

Lipid Extraction. Total milk lipids were extracted by mixing the sample with 1.2 ml of a 6% NaCl solution in water followed by 16 ml of chloroform/methanol (2:1). Samples were mixed vigorously for 5 min and centrifuged at 3000 rpm for 5 min. 8 ml of the lower $CHCl_3$ phase were removed. The above mentioned extraction procedure was repeated and the combined organic extract (2x8 millilitres) were dried down under vacuum. Samples were reconstituted in 5 ml of $CHCl_3$. Phospholipids were further purified by solid phase extraction (SPE). The column was washed first with 4 ml of chloroform/isopropanol (2:1) to remove neutral lipids and then with 4 ml of diethylether acidified with glacial acetic acid (2% v/v) to remove free fatty acids. Phospholipids were then eluted with 4 ml of methanol, dried down in a rotary evaporator, and reconstituted in 0.6 ml of mobile phase A for HPLC analysis.

HPLC Method. The stationary phase consisted of a Luna Silica (150 x 4.6 mm, 5 μ, 100 A) analytical column and a Security Guard Cartridge (4.0 x 3.0 mm) consisting of the same packing material. Both analytical and guard columns were from Phenomenex (Torrance, CA USA). The mobile phases consisted of an A mixture containing 80% chloroform, 19.5% methanol, 0.5% ammonium hydroxide and a B mixture of 60% chloroform, 34% methanol, 5.5% water, 0.5% ammonium hydroxide. The following linear gradient was utilized: a starting composition of 80% A/20% B was held for 2 min, proceeding to 100% B from 2 min to 14 min; 100% B was maintained from 14 min to 20 min, returning to 80% A/20% B from 20 min to 23 min. The time required to re-equilibrate the column in a sequence of runs was 7 min.

phospholipid standards consisted of highly pure phosphatidylethanolamine (PE) and phosphatidylcholine (PC) (Avanti Polar Lipids, Inc.). Stock solutions were routinely prepared in chloroform in the concentration range of 2-10 mg/ml. HPLC calibrators were prepared from phospholipid stock solutions by dilution to the appropriate concentration in mobile phase A. Detection was performed by light scattering.

Quantitative Analysis of phospholipids. Standard curves with a dynamic mass range of 2.5 to 12 μg of PE and PC were constructed on the HPLC. Controls (untreated and reference enzyme samples) and test samples were analyzed in duplicate. The masses of PE and PC of control and test samples were predicted from the appropriate standard curve by non-linear regression analysis using a $2^{nd}$ order polynomial model. The extent of phospholipid depletion in test samples was calculated by comparing the mass of PE and PC to those found in the untreated control sample.

Results.

The results of PE and PC depletion are shown in table 1. Degradation of sphingomyelin was evident from the chromatograms. However, as not standard curve was prepared, % depletion can not be calculated for sphingomyelin.

Table 1

| | Dosage | PE | PE depletion | PC | PC Depletion |
|---|---|---|---|---|---|
| Enzyme | units/g fat | μg/ml | % | μg/ml | % |
| PLC | 0 | 0.837 | 0 | 0.562 | 0 |
| | 5 | 0.075 | 91 | 0.049 | 91 |
| | 10 | 0.064 | 92 | 0.049 | 91 |
| | 50 | 0.058 | 93 | 0.049 | 91 |
| PLD | 0 | 0.652 | 0 | 0.390 | 0 |
| | 500 | 0.312 | 52 | 0.189 | 52 |
| | 1000 | 0.314 | 52 | 0.165 | 58 |
| | 1500 | 0.215 | 67 | 0.144 | 63 |

**Example 2**

**Cheese making with phospholipase D**

Pasteurised, non-homogenized cream was used to standardize five hundred grams pasteurised, non-homogenized skim milk to 3.5% fat thus producing full fat mozzarella cheese. 3 batches of cheese milk was treated with phospholipase D, and placed in a 35°C water bath until equilibrated to that temperature.

The initial pH of the cheese milk was taken and 0.01% (w/w) of starter culture at was added. pH was monitored until a pH of 6.4 was reached. 250 microliter rennet (Novozym 89L) was diluted to in 9 ml total solution with deionised water, one ml of this solution was added to the cheese milk and the cheese milk was stirred vigorously for 3 minutes. The stir bar was removed and the rennetted milk was allowed to sit at 35°C.

After the above treatments, curd was ready to cut when a spatula was inserted and sharp edges were seen. The cheese was cut by pushing the cutter down and while holding the beaker quickly turning the cutter and finally pulling the cutter up. The curd was allowed to rest 5 minutes then stirred gently with spoon. Temperature was raised to 41°C with intermittent gentle agitation for ~ 45 min or until the pH dropped to 6.0-5.9. The curd was drained using cheesecloth then replaced in the beaker and kept at 41°C in water bath while pouring off whey as needed. When the curd reached pH 5.3, the stainless steel bowl with the curd in it was flooded in a water bath at 69°C for 5 minutes then hand stretched. Curd was tempered in cold ice water for 30 minutes. The cheese curd was dried out with paper towel, weighed and refrigerated overnight.

Control cheeses were made from 3 batches of milk following the same procedures except that no phospholipase was added.

Actual cheese yield was calculated as the weight of cheese after stretching relative to the total weight of cheese milk. Moisture adjusted cheese yield was expressed as the actual yield adjusted to standard constant level of moisture. Moisture adjusted yield was calculated by multiplying the actual yield and the ratio of actual moisture content to standard moisture, according to the following formula:

$$Yadj = Yact \times (1 - Mact) / (1 - Mstd)$$

where Yadj = moisture adjusted cheese yield, Yact = actual cheese yield, Mact = actual moisture fraction & Mstd = standard moisture fraction (0.48).

The moisture adjusted cheese yield of cheeses made with phospholipase D was in average 3.1% higher than of control cheeses.

## Claims

1. Use of a phospholipase selected from the group consisting of phospholipase C, phospholipase D, and combinations thereof, for increasing cheese yield.

2. Use of a phospholipase according to claim 1, wherein the phospholipase is added to cheese milk, or a fraction of cheese milk, and cheese is produced from the cheese milk.

3. Use of a phospholipase according to claim 2, wherein the cheese milk is cow's milk.

4. Use of a phospholipase according to any of claims 1-3, wherein the amount of phospholipase C is in the range 0.1-100 units per g milk fat.

5. Use of a phospholipase according to any of claims 1-3, wherein the amount of phospholipase D is in the range 10-10000 units per g milk fat.

6. Use of a phospholipase according to any of claims 2-5, wherein the content of the phospholipase C and/or phospholipase D enzyme protein is removed or reduced after the enzyme has been allowed to act in the cheese milk.

7. Use of a phospholipase according to any of claims 2-6, wherein the phospholipase C and/or phospholipase D is inactivated after the enzyme has been allowed to act in the cheese milk.

8. Use of a phospholipase according to any of claims 1-7, wherein the cheese is selected from the group consisting of rennet-curd cheese produced by rennet-coagulation of the cheese curd, ripened cheese, fresh cheese, and acid coagulated cheese.

9. Use of a phospholipase according to any of claims 1-8, wherein the cheese is selected from the group consisting of Campesino, Chester, Danbo, Drabant, Herregård, Manchego, Provolone, Saint Paulin, Soft cheese, Svecia, Taleggio, White cheese, Cheddar, Colby, Edam, Muenster, Gruyere, Emmenthaler, Camembert, Parmesan, Romano, Mozzarella, Feta, cream cheese, Neufchatel, Quark, and Queso Blanco.

10. Use of a phospholipase according to any of claims 1-9, wherein the cheese milk is subjected to a homogenisation step before the production of cheese.

11. Use of a phospholipase according to claim 10, wherein the cheese is Danish Blue Cheese.

12. Use of a phospholipase according to any of claims 1-11, wherein the cheese is processed into a food product.

13. Use of a phospholipase according to claim 12, wherein said food product is selected from the group consisting of pizza, ready-to-eat dishes, toast, burgers, lasagne, dressing, sauces, cheese powder, cheese flavour, and processed cheese.

## Patentansprüche

1. Verwendung einer Phospholipase, die aus der Gruppe ausgewählt ist, bestehend aus Phospholipase C, Phospholipase D und Kombinationen davon, zur Steigerung des Käseertrags.

2. Verwendung einer Phospholipase nach Anspruch 1, wobei die Phospholipase der Käsereimilch oder einer Käsereimilchfraktion zugefügt wird und aus der Käsereimilch Käse hergestellt wird.

3. Verwendung einer Phospholipase nach Anspruch 2, wobei die Käsereimilch Kuhmilch ist.

4. Verwendung einer Phospholipase nach einem der Ansprüche 1 bis 3, wobei die Menge von Phospholipase C im Bereich von 0,1 bis 100 Einheiten pro g Milchfett liegt.

5. Verwendung einer Phospholipase nach einem der Ansprüche 1 bis 3, wobei die Menge von Phospholipase D im Bereich von 10 bis 10000 Einheiten pro g Milchfett liegt.

6. Verwendung einer Phospholipase nach einem der Ansprüche 2 bis 5, wobei der Gehalt des Phospholipase C- und/oder Phospholipase D-Enzymproteins entfernt oder reduziert wird, nachdem man dem Enzym ermöglicht hat, in der Käsereimilch zu wirken.

7. Verwendung einer Phospholipase nach einem der Ansprüche 2 bis 6, wobei die Phospholipase C und/oder Phospholipase D inaktiviert werden/wird, nachdem man dem Enzym ermöglicht hat, in der Käsereimilch zu wirken.

8. Verwendung einer Phospholipase nach einem der Ansprüche 1 bis 7, wobei der Käse aus der Gruppe ausgewählt ist, bestehend aus Lab-Quarkkäse, der durch Labkoagulation des Käsebruchs, gereiftem Käse, Frischkäse und säurekoaguliertem Käse hergestellt wird.

9. Verwendung einer Phospholipase nach einem der Ansprüche 1 bis 8, wobei der Käse aus der Gruppe ausgewählt ist, bestehend aus Campesino, Chester, Danbo, Drabant, Herregärd, Manchego, Provolone, Saint Paulin, Weichkäse, Svecia, Taleggio, Weißkäse, Cheddar, Colby, Edamer, Münster, Gruyere, Emmentaler, Camembert, Parmesan, Romano, Mozzarella, Feta, Rahmkäse, Neufchatel, Quark und Queso Blanco.

10. Verwendung einer Phospholipase nach einem der Ansprüche 1 bis 9, wobei die Käsereimilch vor der Käseherstellung einem Homogenisierungsschritt unterzogen wird.

11. Verwendung einer Phospholipase nach Anspruch 10, wobei der Käse dänischer Blauschimmelkäse ist.

12. Verwendung einer Phospholipase nach einem der Ansprüche 1 bis 11, wobei der Käse zu einem Lebensmittelprodukt verarbeitet wird.

13. Verwendung einer Phospholipase nach Anspruch 12, wobei das Lebensmittelprodukt aus der Gruppe ausgewählt ist, bestehend aus Pizza, Fertiggerichten, Toast, Burgers, Lasagne, Dressing, Soßen, Käsepulver, Käsearoma und Schmelzkäse.

**Revendications**

1. Utilisation d'une phospholipase choisie dans le groupe constitué par la phospholipase C, la phospholipase D, et des combinaisons de celles-ci, pour augmenter le rendement en fromage.

2. Utilisation d'une phospholipase selon la revendication 1, dans laquelle la phospholipase est ajoutée à du lait fromager, ou une fraction de lait fromager, et du fromage est produit à partir du lait fromager.

3. Utilisation d'une phospholipase selon la revendication 2, dans laquelle le lait fromager est du lait de vache.

4. Utilisation d'une phospholipase selon l'une quelconque des revendications 1-3, dans laquelle la quantité de phospholipase C se trouve dans la plage de 0,1-100 unités par g de matière grasse de lait.

5. Utilisation d'une phospholipase selon l'une quelconque des revendications 1-3, dans laquelle la quantité de phospholipase D se trouve dans la plage de 10-10 000 unités par g de matière grasse de lait.

6. Utilisation d'une phospholipase selon l'une quelconque des revendications 2-5, dans laquelle la teneur en protéine enzymatique de phospholipase C et/ou phospholipase D est éliminée ou réduite après avoir permis à l'enzyme d'agir dans le lait fromager.

7. Utilisation d'une phospholipase selon l'une quelconque des revendications 2-6, dans laquelle la phospholipase C et/ou phospholipase D est inactivée après avoir permis à l'enzyme d'agir dans le lait fromager.

8. Utilisation d'une phospholipase selon l'une quelconque des revendications 1-7, dans laquelle le fromage est choisi dans le groupe constitué par un fromage caillé-présure produit par la coagulation à la présure de caillé fromager, de fromage affiné, de fromage frais, et de fromage à coagulation acide.

9. Utilisation d'une phospholipase selon l'une quelconque des revendications 1-8, dans laquelle le fromage est choisi dans le groupe constitué par le Campesino, le Chester, le Danbo, le Drabant, le Herregård, le Manchego, le Provolone, le Saint-Paulin, le fromage à pâte molle, le Svecia, le Taleggio, le fromage blanc, le Cheddar, le Colby, l'Edam, le Munster, le Gruyère, l'Emmental, le Camembert, le Parmesan, le Romano, la Mozzarella, la Feta, le fromage à la crème, le Neufchâtel, le Quark et le Queso Blanco.

10. Utilisation d'une phospholipase selon l'une quelconque des revendications 1-9, dans laquelle le lait fromager est soumis à une étape d'homogénéisation avant la production de fromage.

11. Utilisation d'une phospholipase selon la revendication 10, dans laquelle le fromage est le fromage bleu danois.

12. Utilisation d'une phospholipase selon l'une quelconque des revendications 1-11, dans laquelle le fromage est transformé en un produit alimentaire.

13. Utilisation d'une phospholipase selon la revendication 12, dans laquelle ledit produit alimentaire est choisi dans le groupe constitué par la pizza, les plats prêts à consommer, les toasts, les burgers, les lasagnes, les sauces pour salade, les sauces, le fromage en poudre, les arômes de fromage, et le fromage fondu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0054601 A
- WO 03070013 A
- US 4106991 A
- US 4661452 A
- EP 238216 A


### Non-patent literature cited in the description


- **KINDSTEDT J.S ; RIPPE J.K.** *J Dairy Sci.,* 1990, vol. 73, 867-873
- **PICÓN et al.** *Biotechnology Letters,* 1997, vol. 19 (4), 345-348
- **UMANSKII et al.** *Molochnaya Promyshlennost,* 1980, vol. 11, 21-25
- Mozzarella and Pizza cheese. **PAUL S. KINDSTEDT.** Cheese: Chemistry, physics and microbiology. Chapman & Hall, vol. 2, 337-341